(19) Europäisches Patentamt / European Patent Office / Office européen des brevets

(11) **EP 4 030 641 A1**

(12) **EUROPEAN PATENT APPLICATION**
published in accordance with Art. 153(4) EPC

(43) Date of publication:
**20.07.2022 Bulletin 2022/29**

(21) Application number: **19945146.9**

(22) Date of filing: **13.12.2019**

(51) International Patent Classification (IPC):
**H04B 10/297** (2013.01)

(52) Cooperative Patent Classification (CPC):
**H04B 10/25; H04B 10/297**

(86) International application number:
**PCT/CN2019/125274**

(87) International publication number:
**WO 2021/047091 (18.03.2021 Gazette 2021/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **11.09.2019 CN 201910858513**

(71) Applicant: **Accelink Technologies Co., Ltd.
Wuhan, Hubei 430205 (CN)**

(72) Inventors:
• **XU, Jian
Wuhan, Hubei 430205 (CN)**
• **SUN, Shujuan
Wuhan, Hubei 430205 (CN)**

(74) Representative: **Frenkel, Matthias Alexander
Wuesthoff & Wuesthoff
Patentanwälte PartG mbB
Schweigerstraße 2
81541 München (DE)**

(54) **BIDIRECTIONAL TRANSMISSION SYSTEM FOR HIGH-SPEED ULTRA-LONG SINGLE-SPAN SINGLE CORE**

(57) The present invention relates to the technical field of optical communications, and in particular, to a bidirectional transmission system for a high-speed ultra-long single-span single core. The bidirectional transmission system comprises a forward transmission system and a reverse transmission system, which share one optical cable and respectively occupy one fiber core, wherein a forward remote pumping unit is provided on a receiving end of the forward transmission system; a reverse remote pumping unit is provided on a receiving end of the reverse transmission system, and further comprises a first hybrid remote gain unit and a second hybrid remote gain unit simultaneously providing a signal amplification function for two directions, wherein the forward remote pumping unit provides a pump light for the second hybrid remote gain unit, and the reverse remote pumping unit provides a pump light for the first hybrid remote gain unit. According to the present invention, only a single fiber core needs to be used in each transmission direction. Remote pumping units are provided on only receiving ends of forward and reverse transmission systems to achieve functions of four optical amplifiers, thereby achieving ultra long-distance optical transmission of a high speed service.

Fig. 1

EP 4 030 641 A1

**Description**

CROSS-REFERENCE

The present disclosure claims the benefit of, and priority to Chinese Patent Application No. 201910858513.9 filed on September 11, 2019, the disclosure of which is hereby expressly incorporated by reference herein in its entirety.

TECHNICAL FIELD OF THE DISCLOSURE

The present invention relates to the technical field of optical communications, and in particular, to a bidirectional transmission system for a high-speed ultralong single-span single core.

BACKGROUND

With the rapid developments of currently emerging technologies and industries such as cloud computing and big data, telecom operators and Internet operations have been under unprecedented pressure. With the increase in the number of connected devices, the amount of data generated increases significantly, requiring higher bandwidth, and the requirements for the network will further increase. In order to better meet these conditions, the computing and processing of these data need to be aggregated to the cloud. In this process, the demand for data transmission will also increase greatly. From the perspective of communication development, the high speed is the eternal theme of optical transmission network development. At present, the transmission speed of 100G implements the mainstream technology of optical transmission network. China has also built the world's largest level 100G wavelength division multiplexer/OTN commercial transmission network. With the advent of the 5G era, the demand for network bandwidth has shown a surge, and the transmission speed of 100G has been not sufficient; in order to alleviate the pressure on data transmission, super-100G coherent transmission represented by single-carrier 200G/400G has become the focus. From the point of view of the speed of the data center, it is generally believed that cloud computing starts from 10G to 40G and then to 100G, and the next-generation data center will be 400G or even higher speed.

For 2.5G, 10G and 100G systems, the singlewave input optical power can reach more than 10dBm, but when the speed reaches 200G, 400G, etc., due to the use of more complex coding types such as 16QAM, 32QAM and 64QAM, the single channel input optical power is reduced to be below 10 dBm, and at the same time, the optical signal-to-noise ratio (OSNR) tolerance of the receiving end is getting higher and higher. If the Erbium-doped Fiber Amplifier (EDFA) technology is used, the single-span transmission capability of the system is severely limited. For a single-wavelength 400G system, the single-span system can only achieve 30dB and the transmission distance is only 150km. If the Raman Fiber Amplifier (RFA) technology is used, the backward Raman amplifier technology can improve the span capability of the system by about 5dB; however, with the adoption of 32QAM or 64QAM or even more complex encoding, due to the limitation of nonlinear effects and compensation algorithms, when forward Raman amplifier technology is used, the system span is not significantly improved.

Therefore, for the ultra-long single-span system of the high speed service exceeding 200G, the system transmission based on the Raman amplifier technology can only achieve a system transmission of 200km at present, and even if the backward follow-bypass remote pump amplifier technology is used, it can only achieve a system transmission of 270km. At present, the forward follow-bypass remote pump amplifier and the backward follow-bypass remote pump amplifier technology are used to further improve the transmission span of the system, but these technologies will increase the core dedicated for transmission pumping, increase the system construction cost and design complexity. Therefore, it is currently desired that there will be a transmission technology that realizes ultra-long-span transmission through a single fiber core to solve the transmission problem of ultra-200G high speed services over 300km or even 400km.

In view of this, to overcome the above-mentioned defects of the prior art is an urgent task in the technical field.

SUMMARY

The technical problem to be solved by the present disclosure is:
for the high-speed service over 200G, the transmission spans of the EDFA amplification technology and the RFA amplification technology are insufficient. Although the remote pump amplification technology can improve the transmission span, the improvement is limited, and it will increase the fiber core specially used for transmission pump, increases the system construction cost and design complexity. Therefore, it is desired that a single fiber core can realize ultra-long span transmission and solve the transmission problem of high speed services over 200G.

The present disclosure achieves the above object through the following technical solutions.

The present disclosure provides a bidirectional transmission system for a high-speed ultra-long singlespan single core, wherein the bidirectional transmission system comprises a forward transmission system and a reverse transmission system, which share an optical cable and occupy a fiber core respectively; wherein a receiving end of the forward transmission system is provided with a forward remote pumping unit 10, and a receiving end of the reverse transmission system is provided with a reverse remote pumping unit 21;

the bidirectional transmission system further comprises a first hybrid remote gain unit and a second hybrid remote gain unit that provide signal amplification functions for two directions simultaneously, the first hybrid remote gain unit comprising a forward first remote gain unit 5 and a reverse second remote gain unit 18, the second hybrid remote gain unit comprising a forward second remote gain unit 7 and a reverse first remote gain unit 16, and the two hybrid remote gain units adopting the same optical path structure;

wherein the forward remote pumping unit 10 provides pump light for signal amplification for the second hybrid remote gain unit, and the reverse remote pumping unit 21 provides pump light for signal amplification for the first hybrid remote gain unit.

Further, the forward transmission system comprises a forward optical transmitter 1, a forward optical amplifier 3, a forward first transmission fiber core 4, the forward first remote gain unit 5, a forward second transmission fiber cores 6, the forward second remote gain unit 7, a forward third transmission fiber core 8, the forward remote pumping unit 10 and a forward optical receiver 11 that are sequentially connected in a forward direction; wherein the forward remote pumping unit 10 provides pump light for signal amplification for the second hybrid remote gain unit through the forward third transmission fiber core 8; and

The reverse transmission system comprises a reverse optical transmitter 12, a reverse optical amplifier 14, a reverse first transmission fiber core 15, the reverse first remote gain unit 16, a reverse second transmission fiber core 17, the reverse second remote gain unit 18, a reverse third transmission fiber core 19, the reverse remote pumping unit 21 and a reverse optical receiver 22 that are sequentially connected in reverse direction; wherein the reverse remote pumping unit 21 provides the first hybrid remote gain unit with pump light for signal amplification through the reverse third transmission fiber core 19.

Further, the forward first transmission fiber core 4, the forward second transmission fiber core 6 and the forward third transmission fiber core 8 are the same and identical core; the reverse first transmission fiber core 15, the reverse second transmission fiber core 17 and the reverse third transmission fiber core 19 are the same and identical core; and

The forward first transmission fiber core 4 and the reverse third transmission fiber core 19 are located in a first transmission optical cable, the forward second transmission fiber core 6 and the reverse second transmission fiber core 17 are located in a second transmission optical cable, the forward third transmission fiber core 8 and the reverse first transmission fiber core 15 are located in a third transmission optical cable, and the first transmission optical cable, the second transmission optical cable and the third transmission optical cable are three parts of the same optical cable.

Further, the first hybrid remote gain unit and the second hybrid remote gain unit both are composed of an isolator, an erbium-doped fiber, a wavelength division multiplexer and a reflecting mirror.

Further, the forward first remote gain unit 5 in the first hybrid remote gain unit specifically comprises a forward first input end isolator 32, a forward first input end wavelength division multiplexer 33, a forward first erbium-doped fiber 34, a forward first output end wavelength division multiplexer 35 and a forward first output end isolator 36 that are sequentially connected in the forward direction;

The reverse second remote gain unit 18 in the first hybrid remote gain unit specifically comprises a reverse first input end isolator 38, a reverse first input end wavelength division multiplexers 39, a reverse first erbium-doped fiber 40, a reverse reflecting mirror 41 and a reverse first output end wavelength division multiplexer 42 that are sequentially connected in a reverse direction;

Wherein a pumping end of the forward first output end wavelength division multiplexer 35 is connected to a pumping end of the reverse first input end wavelength division multiplexer 39, and a pumping end of the reverse first output end wavelength division multiplexer 42 is connected to a pumping end of the forward first input end wavelength division multiplexer 33.

Further, pump light entering the first hybrid remote gain unit first enters the forward first remote gain unit 5 to amplify high speed service of the forward transmission system; residual pump light enters the reverse second remote gain unit 18 to amplify high speed service of the reverse transmission system;

Pump light entering the second hybrid remote gain unit first enters the reverse first remote gain unit 16 to amplify the high speed service of the reverse transmission system; residual pump light enters the forward second remote gain unit 7 to amplify the high speed service of the forward transmission system.

Further, the forward first remote gain unit 5 in the first hybrid remote gain unit specifically comprises a forward reflecting mirror 52, a forward second erbium-doped fiber 53, a forward second output end wavelength division multiplexer 54 and a forward second output end isolator 55 that are sequentially connected in a forward direction;

The reverse second remote gain unit 18 in the first hybrid remote gain unit specifically comprises a reverse second input end isolator 57, a reverse second input end wavelength division multiplexer 58, a reverse second erbium-doped fiber 59, a reverse second output end wavelength division multiplexer 60, a reverse second output end isolator 61 and a reverse third output end wavelength division multiplexer 62 that are sequentially connected in a reverse direction;

Wherein a pumping end of the reverse second input end wavelength division multiplexer 58 is connected to a pumping end of the forward second output end wavelength division multiplexer 54.

Further, pump light entering the first hybrid remote gain unit first enters the reverse second remote gain unit 18 to amplify high speed service of the reverse transmission system; residual pump light enters the forward first remote gain unit 5 to amplify high speed service of the forward transmission system;

Pump light entering the second hybrid remote gain unit first enters the forward second remote gain unit 7 to amplify the high speed service of the forward transmission system; residual pump light enters the reverse first remote gain unit 16 to amplify the high speed service of the reverse transmission system.

Further, a distance between a transmitting end of the forward transmission system and the first hybrid remote gain unit, a distance between the receiving end of the forward transmission system and the second hybrid remote gain unit, a distance between a transmitting end of the reverse transmission system and the second hybrid remote gain unit, and a distance between the receiving end of the reverse transmission system and the first hybrid remote gain unit are equal, being all L and

$$L = \frac{P_{pump} - 10}{\alpha + 0.023};$$

Where $P_{pump}$ is pump light power of the forward remote pumping unit 10 and the reverse remote pumping unit 21, and $\alpha$ is a loss coefficient of signal light.

Further, signal light single-channel speeds of transmitters of the forward transmission system and the reverse transmission system are 200Gb/s, 300Gb/s, 400Gb/s, 500Gb/s, 600Gb/s, 700Gb/s, 800Gb/s, 900Gb/s, 1Tb/s, 1.1Tb/s or 1.2Tb/s.

The beneficial effects of the present invention are as follows:

In the bidirectional transmission system provided by the present disclosure, only a single fiber core is required for each transmission direction, and the forward transmission system and the reverse transmission pump system are only provided with a remote pumping unit at the receiving end which can realize the function of four optical amplifiers and thus enables ultra-long-distance optical transmission of high speed services. Compared with the EDFA amplification technology, the RFA amplification technology and the remote pump amplification technology, the system can further improve the system span by more than 10dB achieve system transmission with a single span of more than 350km, and is suitable for any optical transmission system with speed between 200Gb/s and 1.2Tb/s..

BRIEF DESCRIPTION OF THE DRAWINGS

In order to describe the technical solutions of the embodiments of the present invention more clearly, the accompanying drawings that need to be used in the embodiments of the present invention are briefly introduced as follows. Obviously, the drawings described below are only some embodiments of the present invention, and as for those of ordinary skill in the art, other drawings can also be obtained from these drawings without creative effort.

FIG. 1 is a schematic structural diagram of a bidirectional transmission system for a high-speed ultra-long single-span single core provided in an embodiment of the present disclosure;
FIG. 2 is a schematic structural diagram of a hybrid remote gain unit according to an embodiment of the present disclosure;
FIG. 3 is a schematic structural diagram of another hybrid remote gain unit provided by an embodiment of the present disclosure;

Wherein, the reference numerals are as follows:

forward optical transmitter 1, forward high speed service signal light 2, forward optical amplifier 3, forward first transmission fiber core 4, forward first remote gain unit 5, forward second transmission fiber core 6, forward second remote gain unit 7, forward third transmission fiber core 8, forward system pump light 9, forward remote pumping unit 10, forward optical receiver 11, reverse optical transmitter 12, reverse high speed service signal light 13, the reverse optical amplifier 14, the reverse first transmission fiber core 15, reverse first remote gain unit 16, reverse second transmission fiber core 17, reverse second remote gain unit 18, reverse third transmission fiber core 19, reverse system pump light 20, reverse remote pumping unit 21 and reverse optical receiver 22;
forward transmission first service optical signal 31, first input end isolator 32, forward first input end wavelength division multiplexer 33, forward first erbium-doped fiber 34, forward first output end wavelength division multiplexer 35, forward first output end isolator 36, reverse transmission first service optical signal 37, reverse first input end isolator 38, reverse first input end wavelength division multiplexer 39, reverse first erbium-doped fiber 40, reverse reflecting mirror 41, reverse first output end wavelength division multiplexer 42, and first pump light 43;
forward transmission second service optical signal 51, forward reflecting mirror 52, forward second erbium-doped fiber 53, forward second output end wavelength division multiplexer 54, forward second output end isolator 55, reverse transmission second service optical signal 56, reverse second input end isolator 57, reverse second input end wavelength division multiplexer 58, reverse second erbium-doped fiber 59, reverse second output end wavelength division multiplexer 60, reverse second output end isolator 61, reverse third output end wavelength division multiplexer 62 and second pump light 63.

DETAILED DESCRIPTION

In order to make the objectives, technical solutions and advantages of the present invention clearer, the present invention will be further described in detail below with reference to the accompanying drawings and embodiments. It should be understood that the specific embodiments described herein are only used to explain the present invention, but not to limit the present invention.

In the description of the present invention, the terms "inner", "outer", "longitudinal", "lateral", "above", "below", "top", "bottom", "left", "right", "front"", "rear", etc. are based on the orientation or positional relationship shown in the drawings, and are only for the convenience of describing the present invention rather than requiring the present invention to be constructed and operated in a specific orientation, and therefore should not be construed as limitations of the present invention.

In each embodiment of the present invention, the symbol "/" indicates the meaning of having two functions at the same time, while the symbol "A and/or B" indicates that the combination between the preceding and following objects connected by the symbol comprises three cases i.e. "A", " B", "A and B".

In addition, the technical features involved in the various embodiments of the present invention described below can be combined with each other as long as they do not conflict with each other. The present invention will be described in detail below with reference to the accompanying drawings and embodiments.

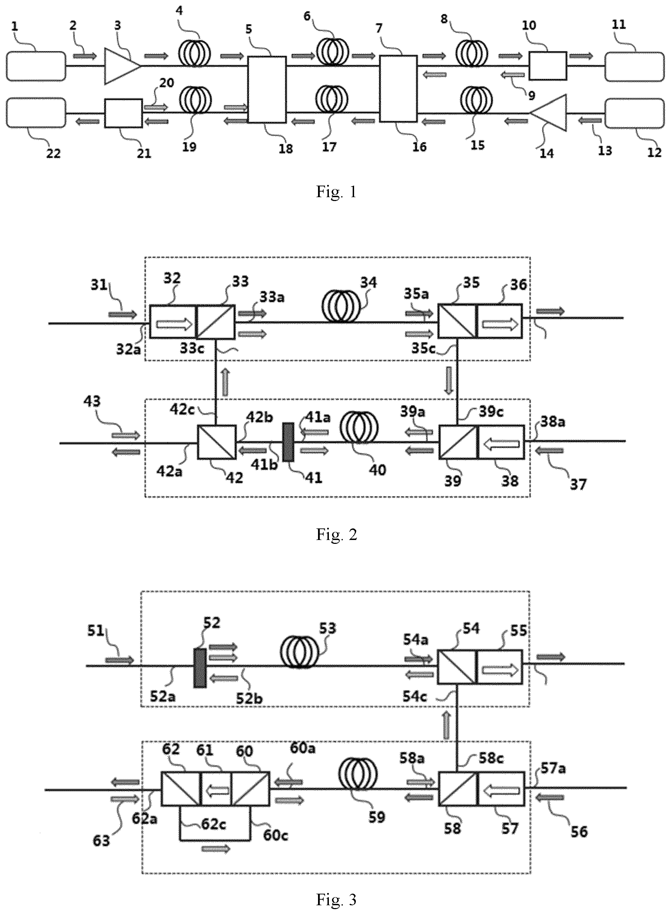

An embodiment of the present disclosure provides a bidirectional transmission system for a high-speed ultra-long single-span single core, as shown in FIG. 1, comprising a forward transmission system (that is, the upper row structure in the figure) and a reverse transmission system (that is, the lower row structure in figure), the two sharing an optical cable and occupying one fiber core respectively; wherein the receiving end (i.e. the right end in the figure) of the forward transmission system is provided with a forward remote pumping unit 10, and the receiving end (i.e., the left end in the figure) of the reverse remote transmission system is provided with a reverse remote pumping unit 21. here, forward and reverse are relative concepts, which are only used to distinguish different directions in the bidirectional communication mode, and can be completely interchanged, and do not limit the specific optical transmission direction; in the drawings corresponding to the embodiments of the present invention, "forward transmission" means transmission from left to right, and "reverse transmission" means transmission from right to left, but it is not intended to limit the present invention.

Referring to FIG. 1, the bidirectional transmission system further comprises a first hybrid remote gain unit and a second hybrid remote gain unit that provide signal amplification functions for both directions at the same time; the first hybrid remote gain unit comprises a forward first remote gain unit 5 and a reverse second remote gain unit 18, the second hybrid remote gain unit comprises a forward second remote gain unit 7 and a reverse first remote gain unit 16, and the two hybrid remote gain units use the same optical path structure in order to reduce workload regarding designing, product type and material quantity. The forward remote pumping unit 10 provides the second hybrid remote gain unit with pump light for signal amplification, and the reverse remote pumping unit 21 provides the first hybrid remote gain unit with pump light for signal amplification.

In the above-mentioned bidirectional transmission system provided by the embodiment of the present invention, only a single fiber core is required for each transmission direction, and both the forward transmission system and the reverse transmission pump system are only provided with a remote pumping unit at the receiving end, and two remote pumping unit can realize the functions of four optical amplifiers, thereby realizing ultra-long-distance optical transmission of high speed services. Compared with the EDFA amplification technology, the RFA amplification technology and the remote pump amplification technology, the system can further improve the system span by more than 10dB and achieve system transmission with a single span of more than 350km, and is suitable for any optical transmission system between 200Gb/s and 1.2Tb/s.

Below in conjunction with the accompanying drawings, the structure of each part of the bidirectional transmission system is introduced in detail:

As shown in FIG. 1, the forward transmission system comprises a forward optical transmitter 1, a forward optical amplifier 3, a forward first transmission fiber core 4, the forward first remote gain unit 5, a forward second optical amplifier 5, a forward second transmission fiber core 6, the forward second remote gain unit 7, a forward third transmission fiber core 8, the forward remote pumping unit 10 and a forward optical receiver 11 connected in sequence in a forward direction; wherein the forward optical amplifier 3 may be erbium-doped fiber amplifier. Based on the above structure, after the forward optical transmitter 1 sends out the forward high speed service signal light 2, the service signal light is amplified by the forward optical amplifier 3, then passes through the forward first transmission fiber core 4 into the forward first remote gain unit 5, and uses the pump light provided by the reverse remote pumping unit 21 to complete the gain amplification of the signal light; subsequently the signal light enters the forward second remote gain unit 7 through the forward second transmission fiber core 6 and utilizes the pump light generated by the forward remote pumping unit 10 to perform gain amplification of the signal light again; and then after the signal light passes through the forward third transmission fiber core 8 and the forward remote pumping unit 10, it is received by the forward optical receiver 11.

The forward remote pumping unit 10 provides pump light for signal amplification for the second hybrid remote gain unit through the forward third transmission fiber core 8. Specifically: the forward system pump light 9 emitted by the forward remote pumping unit 10 is reversely transmitted to the second hybrid remote gain unit through the forward third transmission fiber core 8, and then provides the forward second remote gain unit 7 and the reverse first remote gain unit 16 of the hybrid remote gain unit with pump light for signal amplification. In the forward third transmission fiber core 8, the transmission directions of the service signal light and the pump light are opposite, wherein the service signal light is output from the forward second remote gain unit 7, and then reaches the forward remote gain unit 10; and the pump light is output from the forward remote pumping unit 10, and then reaches the forward second remote gain unit 7.

Continuing to refer to FIG. 1, similar to the forward transmission system, the reverse transmission system comprises a reverse optical transmitter 12, a reverse optical amplifier 14, a reverse first transmission fiber core 15, a reverse first remote gain unit 16, a reverse second transmission fiber core 17, a reverse second remote gain unit 18, a reverse third transmission fiber core 19, a reverse remote pumping unit 21 and a reverse optical receiver 22 connected in sequence in a reverse direction; wherein the reverse optical amplifier 14 may be an erbium-doped fiber amplifier. Based on the above structure, after the reverse optical transmitter 12 sends out the reverse high speed service signal light 13, the reverse optical amplifier 14 amplifies the service optical signal, which is then transmitted through the reverse first transmission fiber core 15 to enter the reverse first remote gain unit 16, and use the pump light generated by the forward remote pumping unit 10 to complete the gain amplification of the signal light; then the signal light enters the reverse second remote gain unit 18 through the reverse second transmission fiber core 17, utilizes the pump light generated by the reverse remote pumping unit 21 to further amplify the gain of the signal light; subsequently, the signal light passes through the reverse third transmission fiber core 19 and the reverse remote pumping unit 21, then it is received by the reverse optical receiver 22 .

The reverse remote pumping unit 21 provides pump light for signal amplification to the first hybrid remote gain unit through the reverse third transmission fiber core 19. Specifically, the reverse system pump light 20 emitted by the reverse remote pumping unit 21 is transmitted to the first hybrid remote gain unit through the reverse third transmission fiber core 19, and then provides pump light to the reverse second remote gain unit 18 and the forward first remote gain unit 5 of the first hybrid remote gain unit for signal amplification. In the reverse third transmission fiber core 19, the transmission directions of the service signal light and that of the pump light are opposite, and the service signal light is output from the reverse second remote gain unit 18, and then reaches the reverse remote pumping unit 21; the pump light is output from the reverse remote pumping unit 21, and then reaches the reverse second remote gain unit 18.

Further referring to FIG. 1, in the forward transmission system, the forward first transmission fiber core 4, the forward second transmission fiber core 6 and the forward third transmission fiber core 8 are the same and identical fiber core. In the reverse transmission system, the reverse first transmission fiber core 15, the reverse second transmission fiber core 17 and the reverse third transmission fiber core 19 are the same and identical fiber core. The forward first transmission fiber core 4 and the reverse third transmission fiber core 19 are located in the first transmission optical cable. The forward second transmission fiber core 6 and the reverse second transmission fiber core 17 are located in the second transmission optical cable. The forward third transmission fiber core 8 and the reverse first transmission fiber core 15 are located in the third transmission optical cable. The first transmission optical cable, the second transmission optical cable and the third transmission optical cable are three parts of the same optical cable. An optical cable contains multiple fiber cores. Combining the above description, it can be seen that the forward transmission system and the reverse transmission system here share one optical cable, and respectively occupy one core of the multiple fiber cores in the optical cable.

In the embodiment of the present invention, the first hybrid remote gain unit and the second hybrid remote gain unit use the same optical path structure and the same optical device model, and both are composed of an isolator, an erbium-doped fiber, a wavelength division multiplexer and a reflecting mirror. Two optional structures of the first hybrid remote gain unit and the second hybrid remote gain unit will be introduced below with reference to FIG. 2 and FIG.3.

As shown in FIG. 2, taking the first hybrid remote gain unit as an example, in an optional embodiment, the forward first remote gain unit 5 in the first hybrid remote gain unit (i.e., the dotted box in the upper row in the figure) specifically comprises a forward first input end isolator 32, a forward first input end wavelength division multiplexer 33, a forward first erbium-doped fiber 34, a forward first input end isolator 34, a forward first output end wavelength division multiplexer 35 and a forward first output end isolator 36 which are sequentially connected in a forward direction; and the reverse second remote gain unit 18 in the first hybrid remote gain unit (i.e. the dotted box in the lower row in the figure) specifically comprises a reverse first input end isolator 38, a reverse first input end wavelength division multiplexer 39, a reverse first erbium-doped fiber 40, a reverse reflecting mirror 41 and a reverse first output end wavelength division multiplexer 42 which are sequentially connected in a reverse direction.

The input end 32a of the forward first input end isolator 32 is connected to the output end of the forward first transmission fiber core 4; the output end of the forward first input end isolator 32 is connected to the signal end of the forward first input end wavelength division multiplexer 33; the common end 33a of the forward first input end wavelength division multiplexer 33 is connected to the input end of the forward first erbium-doped fiber 34; the output end of the forward first erbium-doped fiber 34 is connected to the common end 35a of the forward first output end wavelength division multiplexer 35; the signal end of the forward first output end wavelength division multiplexer 35 is connected to the input end of the forward first output end isolator 36; and the output end of the forward first output end isolator 36 outputs the amplified service signal light. The pumping end 35c of the forward first output wavelength division multiplexer 35 is connected to the pumping end 39c of the reverse first input end wavelength division multiplexer 39; the input end 38a of the reverse first input end isolator 38 is connected to the output end of the reverse second transmission fiber core 17; the output end of the reverse first input end isolator 38 is connected to the signal end of the reverse first input end wavelength division multiplexer 39; the common end 39a of the reverse first input end wavelength division multiplexer 39 is connected to the input end of the reverse first erbium-doped fiber 40; the output end of the reverse first erbium-doped fiber 40 is connected to the input end 41a of the reverse reflecting mirror 4; the output end 41b of the reverse reflecting mirror 41 is connected to the signal end 42b of the reverse first output end wavelength division multiplexer 42; the pumping end 42c of the reverse first output end wavelength division multiplexer 42 is connected to the pumping end 33c of the forward first input end wavelength division multiplexer 33; and the common end 42a of the reverse first output end wavelength multiplexer 42 is connected to the input end of the reverse third transmission fiber core 19.

Referring to FIG. 2, the flow direction of the service optical signal in the forward transmission system is as follows: the forwardly transmitted first service optical signal 31 sequentially passes through the input end 32a of the forward first input end isolator 32, the output end of forward first input end isolator 32, the signal end of the forward first input end wavelength division multiplexer 33, the common end 33a of the forward first input end wavelength division multiplexer 33, the forward first erbium-doped fiber 34, the common end 35a of the forward first output wavelength division multiplexer 35, the signal end of the forward first output end wavelength division multiplexer 35, and the input end of the forward first output end isolator 36, and the amplified signal light is output through the output end of the forward first output end isolator 36 .

The flow direction of the service optical signal in the reverse transmission system is as follows: the reversely transmitted first service optical signal 37 sequentially passes through the input end 38a of the reverse first input end isolator 38, the output end of reverse first input end isolator 38, the signal end of the reverse first input end wavelength division multiplexer 39, the common end 39a of the reverse first input end wavelength division multiplexer 39, the reverse first erbium-doped fiber 40, the reverse reflecting mirror 41, and the signal end 42b of the reverse first output end wavelength division multiplexer 42, and the amplified signal light passes through the common end 42a of reverse first output end wavelength division multiplexer 42 to be output.

Continuing with reference to FIG. 2, the flow direction of the pump light is as follows: the first pump light 43 sequentially passes through the common end 42a of the reverse first output wavelength division multiplexer 42, the pumping end 42c of the reverse first output end wavelength division multiplexer device 42, the pumping end 33c of the forward first input end wavelength division multiplexer 33, the common end 33a of the forward first input end wavelength division multiplexer 33, the forward first erbium-doped fiber 34, the common end 35a of the forward first output wavelength division multiplexer 35, the pumping end 33c of the forward first input end wavelength division multiplexer 33, the pumping end 39c of the reverse first input end wavelength division multiplexer 39, the common end 39a of the reverse first input end wavelength division multiplexer 39, the reverse first erbium-doped fiber 40, and the input end 41a of the reverse reflecting mirror 41, and the reverse reflecting mirror 41 reflects the pump light back into the reverse first erbium-doped fiber 40 for further amplifying the signal light.

It can be seen from the above that the pump light entering the first hybrid remote gain unit first enters the forward first remote gain unit 5 to amplify the high speed service of the forward transmission system; the residual pump light enters the reverse second remote gain unit 18 to amplify the high speed service of the reverse transmission system. The second hybrid remote gain unit and the first hybrid remote gain unit adopt the same structure as shown in FIG. 2, and the pump light entering the second hybrid remote gain unit first enters the reverse first remote gain unit 16 to amplify the high speed service of the reverse transmission system; the residual pump light enters the forward second remote gain unit 7 to amplify the high speed service of the forward transmission system.

Further referring to FIG. 3, still taking the first hybrid remote gain unit as an example, in another optional embodiment, the forward first remote gain unit 5 in the first hybrid remote gain unit specifically comprises a forward reflecting mirror 52, a forward second erbium-doped fiber 53, a forward second output end wavelength division multiplexer 54 and a forward second output end isolator 55 which are connected sequentially in a forward direction; the reverse second remote gain unit 18 in the first hybrid remote gain unit specifically comprises a reverse second input end isolator 57, a reverse second input end wavelength division multiplexer 58, a reverse second erbium-doped fiber 59, a reverse second output end wavelength division multiplexer 60, a reverse second output end isolator 61, and a reverse third output end wavelength division multiplexer 62 which are connected sequentially in a reverse direction.

The input end 52a of the forward reflecting mirror 52 is connected to the output end of the first forward transmission fiber core 4; the output end 52b of the forward reflecting mirror 52 is connected to the input end of the second forward erbium-doped fiber 53; the output end of the forward second erbium-doped fiber 53 is connected to the common end 54a of the forward second output end wavelength division multiplexer 54; the signal end of the forward second output end wavelength division multiplexer 54 is connected to the input end of the forward second output end isolator 55; and the output end of the forward second output end isolator 55 outputs the amplified service signal light. The pumping end 54c of the forward second output end wavelength division multiplexer 54 is connected to the pumping end 58c of the second reverse input end wavelength division multiplexer 58; the input end 57a of the reverse second input end isolator 57 is connected to the output end of the reverse second transmission fiber core 17; the output end of the reverse second input end isolator 57 is connected to the signal end of the reverse second input end wavelength division multiplexer 58; the common end 58a of the reverse second input end wavelength division multiplexer 58 is connected to the input end of the reverse second erbium-doped fiber 59; the output end of the reverse second erbium-doped fiber 59 is connected to the common end 60a of the reverse second output end wavelength division multiplexer 60; the signal end of the reverse second output end wavelength division multiplexer 60 is connected to the input end of reverse second output end isolator 61; the output end of the reverse second output end isolator 61 is connected to the signal end of the reverse third output end wavelength division multiplexer 62; the common end 62a of reverse third output end wavelength division multiplexer 62 is connected to the input end of the reverse third transmission fiber core 19; and the pumping end 62c of the reverse third output end of the wavelength division multiplexer 62 is connected to the pumping end 60c of the reverse second output end wavelength division multiplexer 60.

Referring to FIG. 3 , the flow direction of the service optical signal in the forward transmission system is as follows: the forwardly transmitted second service optical signal 51 sequentially passes through the forward reflecting mirror 52, the forward second erbium-doped fiber 53, and the common end 54a of the forward second output end wavelength division multiplexer 54, the signal end of the forward second output end wavelength division multiplexer 54, and the input end of the forward second output end isolator 55, and the amplified signal light is output from the output end of the forward second output end isolator 55.

The flow direction of the service optical signal in the reverse transmission system is as follows: the reversely transmitted second service optical signal 56 sequentially passes through the input end 57a of the reverse second input end isolator 57, the output end of the reverse second input end isolator 57, the signal end of the reverse second input end wavelength division multiplexer 58, the common end 58a of the reverse second input end wavelength division multiplexer 58, the reverse erbium-doped fiber 59, the common end 60a of the reverse second output wavelength division multiplexer 60, the signal end of the reverse second output wavelength division multiplexer 60, the input end of the reverse second output end isolator 61, the output end of the reverse second output end isolator 61, and the signal end of the reverse third output end of the wavelength division multiplexer 62, and the amplified signal light is output from the common end 62a of the reverse third output end wavelength division multiplexer 62.

Continuing with reference to FIG. 3, the flow direction of the pump light is as follows: the second pump light 63 sequentially passes through the common end 62a of the reverse third output end wavelength division multiplexer 62, the pumping end 62c of the reverse third output end wavelength division multiplexer 62, the pumping end 60c of the reverse second output wavelength division multiplexer 60, the common end 60a of the reverse second output wavelength division multiplexer 60, the reverse second erbium-doped fiber 59, the common end 58a of the reverse second input end wavelength division multiplexer 58, the pumping end 58c of the reverse second input end wavelength division multiplexer 58, the pumping end 54c of the forward second output end wavelength division multiplexer 54, the common end 54a of the forward second output end wavelength division multiplexer 54, the second forward erbium-doped fiber 53, and the forward reflection mirror 52, and the forward reflection mirror 52 reflects the pump light back into the forward second erbium-doped fiber 53 for further amplifying the signal light.

It can be seen from the above that the pump light entering the first hybrid remote gain unit first enters the reverse second remote gain unit 18 to amplify the high speed service of the reverse transmission system; the residual pump light enters the forward first remote gain unit 5 for amplifying the high speed service of the forward transmission system. The second hybrid remote gain unit adopts the same structure as shown in FIG. 3 as that of the first hybrid remote gain unit, and the pump light entering the second hybrid remote gain unit first enters the forward second remote gain unit 7 to amplify the high speed service of the forward transmission system; the residual pump light enters the reverse first remote gain unit 16 to amplify the high speed service of the reverse transmission system.

To sum up, whether the first hybrid remote gain unit and the second hybrid remote gain unit adopt the structure shown in FIG. 2 or the structure shown in FIG. 3, the following effects can be achieved: the reverse remote pumping unit 21 may provide pump light for signal amplification for the first hybrid remote gain unit (i.e., the reverse second remote gain unit 18 and the forward first remote gain unit 5); the forward remote pumping unit 10 may provide pump light for signal amplification for the second hybrid remote gain unit (i.e., the forward second remote gain unit 7 and the reverse first remote gain unit 16). That is to say, the forward remote pumping unit and the reverse remote pumping unit can implement the functions of four optical amplifiers, thereby realizing ultra-long-distance optical transmission for high speed services. The wavelength ranges of the pump light of the forward remote pumping unit 10 and the reverse remote pumping unit 21 are both from 1470 nm to 1500 nm.

Further, the placement positions of the two hybrid remote gain units in the system satisfy the following conditions: the distance between the transmitting end of the forward transmission system and the first hybrid remote gain unit, the distance between the receiving end of the forward transmission system and the second hybrid remote gain unit, the distance between the transmitting end of the reverse transmission system and the second hybrid remote gain unit, and the distances between the receiving end of the reverse transmission system and the first hybrid remote gain unit are equal and are all set to be L, here

$$L = \frac{P_{pump} - 10}{\alpha + 0.023}$$

, where $P_{pump}$ is the pump light power of the forward remote pumping unit 10 and the reverse remote pumping unit 21, and $\alpha$ is the loss coefficient of the signal light.

Further, in the embodiment of the present disclosure, the signal light single-channel rate of the transmitter of the forward transmission system and the reverse transmission system may be any one of 200Gb/s, 300Gb/s, 400Gb/s, 500Gb/s, 600Gb/s, 700Gb/s, 800Gb/s, 900Gb/s, 1Tb/s, 1.1Tb/s, and 1.2Tb/s.

To sum up, the bidirectional transmission system provided by the embodiment of the present disclosure mainly has the following advantages:

First, the present disclosure only needs to use a single fiber core in each transmission direction, and both the forward transmission system and the reverse transmission pump system are only provided with a remote pumping unit at the receiving end, that is, only two remote pumping units, two remote gain units are needed to realize the functions of four optical amplifiers; compared with the conventional EDFA amplification technology, RFA amplification technology, and backward remote pump amplification technology, this scheme of the transmission system can continue to improve the system span by more than 10dB, and achieve single-span transmission systems over 350km;

Second, the present disclosure is suitable for optical transmission systems with any rate between 200Gb/s and 1.2Tb/s, and is suitable for various coding modes such as 8QAM, 16QAM, 32QAM, 64QAM, etc., which is beneficial to the smooth upgrade of the system;

Third, the first hybrid remote gain unit and the second hybrid remote gain unit in the present disclosure use the same optical path structure, reducing workload regarding designing, product models, and material quantities, while the traditional forward first stage remote gain unit and forward second stage remote gain unit adopt different optical path structures, which are more complicated;

Fourth, the present disclosure is suitable for ultra-long-span optical transmission systems on the seabed and on land.

In order to better realize the bidirectional remote pump, the present inventors have previously studied a bidirectional remote pump system (the patent document No. CN201510375829.4), using two sets of remote gain units and four sets of remote pumping units, that is, remote pumping units are arranged on both the transmitting end and the receiving end of the forward transmission system, and are arranged on the transmitting end and the receiving end of the reverse transmission system. However, in further research and use, it is found that the bidirectional remote pump system in this patent (i.e., the patent document No. CN201510375829.4) still has the following defects: first, it is only suitable for low-speed services below 100Gb/s, and when applied to high-speed services above 200Gb/s, it will has an impact on the business, and the optical signal-to-noise ratio cannot be further improved; second, four remote pumping units are used to realize the functions of four amplifiers, and the cost is relatively high; third, the wavelengths of the service channels in the two directions must be inconsistent; forth, the remote gain unit has only one section of erbium-doped fiber, and the forward remote gain unit and the reverse remote gain unit share the optical path structure, both sharing the pump light at the same time.

In fact, the present disclosure aims at the above problems, and further improves the bidirectional remote pumping system provided by the prior patent, wherein only the receiving ends of the forward transmission system and the reverse transmission system are respectively provided with the remote pumping units; and the structure of the hybrid remote gain unit is further improved. After the improvement, the present disclosure has the following obvious advantages compared with the prior patent: first, it can be applied to high-speed services above 200Gb/s, and the business scope has been expanded; second, only two pumping units are needed to realize the functions of four amplifiers, thus the system structure is greatly simplified and the system cost is reduced; third, the wavelengths of the two direction channels are not limited, and they can be the same or different, thus the use range is wider and more flexible; fourth, the hybrid remote gain unit adopts two sections of erbium-doped fiber, and the forward remote gain unit and the backward remote gain unit have independent optical path structures respectively, wherein for the use of pump light, the remote gain unit in one direction is first amplified, and then the remote gain in the other direction is amplified, thereby creatively proposing a way to reuse the residual pump light, and designing a new optical path structure for optical devices. In addition, the present disclosure further provides a calculation method for the placement positions of the two hybrid remote gain units, which is more accurate for the design of the entire system structure. The above descriptions are only preferred embodiments of the present invention and are not intended to limit the present disclosure. Any modifications, equivalent replacements and improvements made within the spirit and principles of the present invention shall be included within the protection scope of the present disclosure.

**Claims**

1. A bidirectional transmission system for a high-speed ultra-long single-span single core, **characterized in that** the bidirectional transmission system comprises a forward transmission system and a reverse transmission system, which share an optical cable and respectively occupy a fiber core; wherein a receiving end of the forward transmission system is provided with a forward remote pumping unit (10), and a receiving end of the reverse transmission system is provided with a reverse remote pumping unit (21);

   the bidirectional transmission system further comprises a first hybrid remote gain unit and a second hybrid remote gain unit that provide signal amplification functions for both directions at the same time, the first hybrid remote gain unit comprising a forward first remote gain unit (5) and a reverse second remote gain unit (18), the second hybrid remote gain unit comprising a forward second remote gain unit (7) and a reverse first remote gain unit (16), and the two hybrid remote gain units adopting the same optical path structure;
   wherein the forward remote pumping unit (10) provides pump light for signal amplification for the second hybrid remote gain unit, and the reverse remote pumping unit (21) provides pump light for signal amplification for the first hybrid remote gain unit.

2. The bidirectional transmission system for a high-speed ultra-long single-span single core of claim 1, wherein the forward transmission system comprises a forward optical transmitter (1), a forward optical amplifier (3), a forward first transmission fiber core (4), the forward first remote gain unit (5), a forward second transmission fiber core (6), the forward second remote gain unit (7) , a forward third transmission fiber core (8), the forward remote pumping unit (10) and a forward optical receiver (11) that are sequentially connected in a forward direction; wherein the forward remote pumping unit (10) provides pump light for signal amplification for the second hybrid remote gain unit through the forward third transmission fiber core (8);

   the reverse transmission system comprises a reverse optical transmitter (12), a reverse optical amplifier (14), a reverse first transmission fiber core (15), the reverse first remote gain unit (16), a reverse second transmission fiber core (17), the reverse second remote gain unit (18), a reverse third transmission fiber core (19), the reverse remote pumping unit (21) and a reverse optical receiver (22) that are sequentially connected in a reverse direction; wherein the reverse remote pumping unit (21) provides the first hybrid remote gain unit with pump light for signal amplification through the reverse third transmission fiber core (19).

3. The bidirectional transmission system for a high-speed ultra-long single-span single core of claim 2, wherein the forward first transmission fiber core (4), the forward second transmission fiber core (6) and the forward third transmission fiber core (8) are the same and identical core; and the reverse first transmission fiber core (15), the reverse second transmission fiber core (17) and the reverse third transmission fiber core (19) are the same and identical fiber core; and
   the forward first transmission fiber core (4) and the reverse third transmission fiber core (19) are located in a first transmission optical cable, and the forward second transmission fiber core (6) and the reverse second transmission fiber core (17) are located in a second transmission optical cable, the forward third transmission fiber core (8) and the reverse first transmission fiber core (15) are located in a third transmission optical cable, and the first transmission optical cable, the second transmission optical cable and the third transmission optical cable are three parts of the same cable.

4. The bidirectional transmission system for a high-speed ultra-long single-span single core of claim 1, wherein the first hybrid remote gain unit and the second hybrid remote gain unit both are composed of an isolator, an erbium-doped fiber, a wavelength division multiplexer and a reflecting mirror.

5. The bidirectional transmission system for a high-speed ultra-long single-span single core of claim 4, wherein the forward first remote gain unit (5) in the first hybrid remote gain unit specifically comprises a forward first input end isolator (32), a forward first input end wavelength division multiplexer (33), a forward first erbium-doped fiber (34), and a forward first output end wave multiplexer (35) and a forward first output end isolator (36) that are sequentially connected in a forward direction;

   the reverse second remote gain unit (18) in the first hybrid remote gain unit specifically comprises a reverse first input end isolators (38), a reverse first input end wavelength division multiplexer (39), a reverse first erbium-doped fiber (40), a reverse reflecting mirror (41) and a reverse first output end wavelength division multiplexer (42) that are sequentially connected in a reverse direction;

wherein a pumping end of the forward first output end wavelength division multiplexer (35) is connected to a pumping end of the reverse first input end wavelength division multiplexer (39), and a pumping end of the reverse first output end wavelength division multiplexer (42) is connected to a pumping end of the forward first input end wavelength division multiplexer (33).

6. The bidirectional transmission system for a high-speed ultra-long single-span single core of claim 5, wherein pump light entering the first hybrid remote gain unit first enters the forward first remote gain unit (5) to amplify high speed service of the forward transmission system; residual pump light enters the reverse second remote gain unit (18) to amplify high speed service of the reverse transmission system; pump light entering the second hybrid remote gain unit first enters the reverse first remote gain unit (16), to amplify the high speed service of the reverse transmission system; residual pump light enters the forward second remote gain unit (7) to amplify the high speed service of the forward transmission system.

7. The bidirectional transmission system for a high-speed ultra-long single-span single core of claim 4, wherein the forward first remote gain unit (5) in the first hybrid remote gain unit specifically comprises a forward reflecting mirror (52), a forward second erbium-doped fiber (53), a forward second output end wavelength division multiplexer (54) and a forward second output end isolator (55) that are sequentially connected in a forward direction;

the reverse second remote gain unit (18) in the first hybrid remote gain unit specifically comprises a reverse second input end isolator (57), a reverse second input end wavelength division multiplexer (58), a reverse second erbium-doped fiber (59), a reverse second output end wavelength division multiplexer (60), a reverse second output end isolator (61) and a reverse third output end wavelength division multiplexer (62) that are sequentially connected in a reverse direction;
wherein a pumping end of the reverse second input end wavelength division multiplexer (58) is connected to a pumping end of the forward second output end wavelength division multiplexer (54).

8. The bidirectional transmission system for a high-speed ultra-long single-span single core of claim 7, wherein pump light entering the first hybrid remote gain unit first enters the reverse second remote gain unit (18) to amplify high speed service of the reverse transmission system; residual pump light enters the forward first remote gain unit (5) to amplify high speed service of the forward transmission system; and

pump light entering the second hybrid remote gain unit first enters the forward second remote gain unit (7) to amplify the high speed service of the forward transmission system; residual pump light enters the reverse first remote gain unit (16) to amplify the high speed service of the reverse transmission system.

9. The bidirectional transmission system for a high-speed ultra-long single-span single core of any one of claims 1-8, wherein a distance between a transmitting end of the forward transmission system and the first hybrid remote gain unit, a distance between the receiving end of the forward transmission system and the second hybrid remote gain unit, a distance between a transmitting end of the reverse transmission system and the second hybrid remote gain unit, and a distance between the receiving end of the reverse transmission system and the first hybrid remote gain unit are equal.

10. The bidirectional transmission system for a high-speed ultra-long single-span single core of any one of claims 1-8, wherein signal light single-channel speeds of transmitters of the forward transmission system and the reverse transmission system are 200Gb/s, 300Gb/s, 400Gb/s, 500Gb/s, 600Gb/s, 700Gb/s, 800Gb/s, 900Gb/s, 1Tb/s, 1.1Tb/s or 1.2Tb/s.

Fig. 1

Fig. 2

Fig. 3

## INTERNATIONAL SEARCH REPORT

| International application No. |
| --- |
| **PCT/CN2019/125274** |

### A. CLASSIFICATION OF SUBJECT MATTER

H04B 10/297(2013.01)i

According to International Patent Classification (IPC) or to both national classification and IPC

### B. FIELDS SEARCHED

Minimum documentation searched (classification system followed by classification symbols)

H04B

Documentation searched other than minimum documentation to the extent that such documents are included in the fields searched

Electronic data base consulted during the international search (name of data base and, where practicable, search terms used)

CNABS; CNKI; CNTXT; VEN; WOTXT; USTXT; EPTXT: 正向, 反向, 双向, 泵浦, 共享, 混合, 共用, 增益, forward, reverse, bidirectional, pump, shar+, gain

### C. DOCUMENTS CONSIDERED TO BE RELEVANT

| Category* | Citation of document, with indication, where appropriate, of the relevant passages | Relevant to claim No. |
| --- | --- | --- |
| PX | CN 110518980 A (ACCELINK TECHNOLOGY CO., LTD.) 29 November 2019 (2019-11-29)<br>    description paragraphs [0045]-[0075], figures 1-3 | 1-10 |
| X | CN 105049123 A (ACCELINK TECHNOLOGY CO., LTD.) 11 November 2015 (2015-11-11)<br>    description paragraphs [0025], [0082]-[0097], figures 1-3 | 1-4, 9, 10 |
| A | CN 105049123 A (ACCELINK TECHNOLOGIES CO., LTD.) 11 November 2015 (2015-11-11)<br>    entire document | 5-8 |
| A | CN 107294604 A (FIBERHOME TELECOMMUNICATION TECHNOLOGIES CO., LTD.) 24 October 2017 (2017-10-24)<br>    entire document | 1-10 |
| A | WO 2018165085 A1 (NEC LABORATORIES AMERICA, INC.) 13 September 2018 (2018-09-13)<br>    entire document | 1-10 |

☐ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **25 May 2020** | **02 June 2020** |

| Name and mailing address of the ISA/CN | Authorized officer |
| --- | --- |
| **China National Intellectual Property Administration (ISA/ CN)**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2019/125274**

| Patent document cited in search report | | | Publication date (day/month/year) | Patent family member(s) | | | Publication date (day/month/year) |
|---|---|---|---|---|---|---|---|
| CN | 110518980 | A | 29 November 2019 | None | | | |
| CN | 105049123 | A | 11 November 2015 | CN | 105049123 | B | 22 December 2017 |
| CN | 107294604 | A | 24 October 2017 | CN | 107294604 | B | 25 June 2019 |
| WO | 2018165085 | A1 | 13 September 2018 | US | 2018261971 | A1 | 13 September 2018 |

Form PCT/ISA/210 (patent family annex) (January 2015)

**EP 4 030 641 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201910858513

- CN 201510375829